# DEMANDE DE BREVET EUROPEEN

(11) **EP 3 502 213 A1**
(43) Date de publication de la demande: **26.06.2019**
(21) Numéro de dépôt: 18210575.9
(22) Date de dépôt: 05.12.2018
(51) Int. Cl.: C10G 45/00, C10G 47/00, C10G 49/00, F25J 5/00, F28D 7/02, F28D 9/04

(54) **ÉCHANGEUR DE CHALEUR BOBINÉ POUR HYDROTRAITEMENT OU HYDROCONVERSION**

(30) Priorité: 22.12.2017 FR 1762993
(71) Demandeur: AXENS, 92508 Rueil-Malmaison Cedex (FR)
(72) Inventeur: SILBERSTEIN, Claire, 92600 ASNIERES SUR SEINE (FR); LAJEUNESSE, ODILE, 92500 RUEIL-MALMAISON (FR); RAULT, Jacques, 75012 PARIS (FR); GAGNIERE, Marielle, 78400 CHATOU (FR)
(74) Mandataire: IFP Energies nouvelles

(57) **Abrégé**

La présente invention concerne un dispositif et un procédé d'hydrotraitement ou d'hydroconversion d'une charge hydrocarbonée, comprenant notamment au moins un échangeur de chaleur bobiné (S-1), ledit échangeur bobiné étant un échangeur de chaleur monopasse constitué par une enceinte verticale dans laquelle un ou plusieurs faisceaux de tubes sont enroulés de manière hélicoïdale autour d'un noyau central, en de nombreuses couches superposées, pour : chauffer et distribuer directement un mélange charge hydrocarbonée-flux d'hydrogène vers une section réactionnelle d'hydrotraitement ou d'hydroconversion (R-1) ; et refroidir l'effluent réactionnel de la section réactionnelle d'hydrotraitement ou d'hydroconversion (R-1). La présente invention concerne également une utilisation d'un échangeur de chaleur bobiné (S-1) dans un procédé d'hydroconversion ou d'hydrotraitement d'une charge hydrocarbonée.

## Description

### Domaine technique

La présente description concerne le domaine des dispositifs et procédés d'hydroconversion (e.g. hydrocraquage de charges lourdes) et d'hydrotraitement (e.g. hydrodémétallation, hydrodéazotation et/ou hydrodésulfuration de résidu ou de gasoil).

### Etat de l'art

Les échangeurs de chaleur de type tubes-calandre (« shell and tubes » selon la terminologie anglo-saxonne) sont connus de longues date. Les brevets US 2,978,226, EP 1 113 238 et EP 2 975 353 décrivent des exemples de ce type d'échangeurs de chaleur. Des échangeurs de chaleur de type tubes-calandre bien connus sont par exemples les échangeurs de chaleur au standard BEU ou DEU qui comprennent des faisceaux de tubes d'échange en forme de U (« U-tube bundle » selon la terminologie anglo-saxonne). Ces standards sont définis par l'association des fabricants d'échangeurs de chaleur TEMA (« Tubular Exchanger Manufacturers Association » selon la terminologie anglo-saxonne ; wwww.tema.org).

Les échangeurs de chaleur bobinés («coil wounded heat exchanger » ou « spiral wounded heat exchange» selon la terminologie anglo-saxonne ; également appelés échangeurs à corps enroulé en spirale) sont connus de l'homme du métier. Ainsi le brevet EP 1367350 décrit un échangeur de chaleur bobiné et son utilisation dans un procédé de liquéfaction de GNL. D'autres configurations d'échangeurs de chaleur bobinés sont par exemple décrites dans les demandes de brevet WO 2004/063655 et WO 2014/067223.

L'utilisation d'échangeurs de chaleur bobinés a été envisagée, au même titre que d'autres échangeurs de chaleur, dans différents procédés tels que par exemple les procédés de conversion de charges lourdes (US 8,152,994 et US 8,277,637) ou les procédés cryogéniques de séparation de l'air (US 6,718,79), sans toutefois que cette utilisation entraine une modification du schéma par rapport au cas où d'autres types d'échangeurs de chaleur (tube-calandre ou échangeurs de chaleur à plaques par exemple) sont utilisés.

### Résumé

Dans le contexte précédemment décrit, un premier objet de la présente description est d'améliorer les dispositifs et procédés d'hydroconversion ou d'hydrotraitement, notamment en termes d'efficacité énergétique et de coût d'exploitation.

Selon un premier aspect, l'objet précité, ainsi que d'autres avantages, sont obtenus par un dispositif d'hydroconversion ou d'hydrotraitement d'une charge hydrocarbonée, comprenant :
au moins un échangeur de chaleur bobiné, ledit échangeur bobiné étant un échangeur de chaleur monopasse constitué par une enceinte verticale dans laquelle un ou
plusieurs faisceaux de tubes sont enroulés de manière hélicoïdale autour d'un noyau central, en de nombreuses couches superposées, adapté pour :
   chauffer et distribuer directement la charge hydrocarbonée et optionnellement un flux d'hydrogène ou un mélange charge hydrocarbonée-flux d'hydrogène vers une section réactionnelle d'hydrotraitement ou d'hydroconversion, et
   refroidir l'effluent réactionnel de la section réactionnelle d'hydrotraitement ou d'hydroconversion ;
une première section de mélange adaptée pour mélanger la charge hydrocarbonée avec le flux d'hydrogène, ladite première section de mélange pouvant se situer en amont ou en aval de l'au moins un échangeur de chaleur bobiné ;
la section réactionnelle d'hydrotraitement ou d'hydroconversion adaptée pour hydrotraiter ou hydroconvertir la charge hydrocarbonée ;
un ballon séparateur froid à haute pression adapté pour séparer au moins une partie de l'effluent réactionnel refroidi en un premier effluent liquide comprenant au moins une fraction légère et un premier effluent gazeux comprenant de l'hydrogène ; et
une colonne de séparation adaptée pour séparer le premier effluent liquide comprenant au moins une fraction légère en un liquide de fond et un effluent de tête.

Selon un ou plusieurs modes de réalisation, le dispositif comprend en outre une première section de compression adaptée pour compresser et recycler le premier effluent gazeux comprenant de l'hydrogène vers la première section de mélange ou l'au moins un échangeur de chaleur bobiné.

Selon un ou plusieurs modes de réalisation, la section réactionnelle d'hydrotraitement ou d'hydroconversion comprend au moins un réacteur comprenant au moins un catalyseur comprenant au moins un élément choisi parmi les éléments du Groupe VIII de la classification périodique.

Selon un ou plusieurs modes de réalisation, le réacteur comprend au moins un lit fixe.

Selon un ou plusieurs modes de réalisation, le réacteur comprend au moins un lit bouillonnant.

Selon un ou plusieurs modes de réalisation, le dispositif comprend un dispositif de filtration de la charge hydrocarbonée à l'entrée de l'unité. Selon un ou plusieurs modes de réalisation, le dispositif de filtration est situé en aval d'un échangeur de chaleur optionnel adapté pour chauffer la charge hydrocarbonée à une température comprise entre 50 et 100°C ou entre 150°C et 230°C.

Selon un ou plusieurs modes de réalisation, le dispositif comprend un ballon de charge adapté pour contenir la charge hydrocarbonée éventuellement filtrée. Ledit ballon étant situé en amont d'une pompe permettant d' alimenter l'échangeur de chaleur bobiné S-1.

Selon un ou plusieurs modes de réalisation, le dispositif comprend un seul échangeur de chaleur bobiné.

Selon un ou plusieurs modes de réalisation, le dispositif comprend en outre un by-pass adapté pour distribuer directement une partie de la charge hydrocarbonée ou une partie du mélange charge hydrocarbonée-flux d'hydrogène depuis l'entrée de l'échangeur de chaleur bobiné vers la sortie de l'échangeur de chaleur bobiné.

Selon un ou plusieurs modes de réalisation, le dispositif comprend en outre un ballon séparateur chaud à haute pression adapté pour séparer l'effluent réactionnel refroidi en un premier effluent liquide comprenant au moins une fraction lourde et un premier effluent gazeux comprenant une fraction légère distribué vers le ballon séparateur froid à haute pression.

Selon un ou plusieurs modes de réalisation, le dispositif comprend en outre un ballon séparateur chaud à moyenne pression adapté pour séparer le premier effluent liquide comprenant au moins une fraction lourde en un deuxième effluent liquide comprenant au moins une fraction lourde distribué vers la colonne de séparation, et un deuxième effluent gazeux comprenant une fraction légère.

Selon un ou plusieurs modes de réalisation, le dispositif comprend en outre un ballon séparateur froid à moyenne pression adapté pour séparer le premier effluent liquide comprenant au moins une fraction légère en un deuxième effluent liquide comprenant au moins une fraction légère distribué vers la colonne de séparation et un deuxième effluent gazeux comprenant de l'hydrogène.

Selon un ou plusieurs modes de réalisation, le ballon séparateur froid à moyenne pression est adapté pour séparer le deuxième effluent gazeux comprenant une fraction légère.

Selon un ou plusieurs modes de réalisation, la section réactionnelle d'hydrotraitement ou d'hydroconversion est adaptée pour distribuer directement l'effluent réactionnel vers l'échangeur de chaleur bobiné.

Selon un ou plusieurs modes de réalisation, le dispositif comprend en outre au moins un deuxième échangeur de chaleur et/ou un générateur de vapeur et/ou un premier aérocondenseur adaptés pour refroidir et/ou condenser le premier effluent gazeux comprenant une fraction légère, respectivement.

Selon un ou plusieurs modes de réalisation, le dispositif comprend en outre une colonne de lavage aux amines adaptée pour éliminer au moins une partie de l'H₂S du premier effluent gazeux comprenant de l'hydrogène.

Selon un ou plusieurs modes de réalisation, le dispositif comprend en outre un deuxième aérocondenseur adapté pour condenser le deuxième effluent gazeux comprenant une fraction légère et distribuer le deuxième effluent gazeux condensé comprenant une fraction légère vers le ballon séparateur froid à moyenne pression.

Selon un ou plusieurs modes de réalisation, le dispositif comprend en outre un troisième échangeur de chaleur adapté pour chauffer le premier ou deuxième effluent liquide comprenant au moins une fraction légère et/ou refroidir le liquide de fond de la colonne de séparation.

Selon un ou plusieurs modes de réalisation, le dispositif comprend en outre un quatrième échangeur de chaleur adapté pour refroidir ou chauffer le premier ou deuxième effluent liquide comprenant au moins une fraction lourde.

Selon un ou plusieurs modes de réalisation, le dispositif comprend en outre un troisième aérocondenseur adapté pour condenser l'effluent de tête de la colonne de séparation.

Selon un ou plusieurs modes de réalisation, le dispositif comprend en outre un ballon de reflux adapté pour séparer l'effluent de tête de la colonne de séparation en une fraction gazeuse de tête et au moins une coupe liquide hydrocarbonnée.

Selon un deuxième aspect, l'objet précité, ainsi que d'autres avantages, sont obtenus par un procédé d'hydroconversion ou d'hydrotraitement d'une charge hydrocarbonée, comprenant les étapes suivantes :
chauffer et distribuer directement la charge hydrocarbonnée et optionnellement un flux d'hydrogène ou un mélange charge hydrocarbonée-flux d'hydrogène vers une section réactionnelle d'hydrotraitement ou d'hydroconversion au moyen d'au moins un échangeur de chaleur bobiné, ledit échangeur bobiné étant un échangeur de chaleur monopasse constitué par une enceinte verticale dans laquelle un ou plusieurs faisceaux de tubes sont enroulés de manière hélicoïdale autour d'un noyau central, en de nombreuses couches superposées ;
mélanger la charge hydrocarbonée avec le flux d'hydrogène dans une première section de mélange, ledit mélange pouvant avoir lieu avant ou après l'étape de chauffe ;
refroidir l'effluent réactionnel de la section réactionnelle d'hydrotraitement ou d'hydroconversion au moyen de l'au moins un échangeur de chaleur bobiné ;
hydrotraiter ou hydroconvertir la charge hydrocarbonée dans la section réactionnelle d'hydrotraitement ou d'hydroconversion comprenant au moins un réacteur comprenant au moins un catalyseur comprenant au moins un élément choisi parmi les éléments du Groupe VIII de la classification périodique ;
séparer au moins une partie de l'effluent réactionnel refroidi dans un ballon séparateur froid à haute pression pour distribuer un premier effluent liquide comprenant au moins une fraction légère et un premier effluent gazeux comprenant de l'hydrogène ; et
séparer le premier effluent liquide comprenant au moins une fraction légère dans une colonne de séparation pour distribuer un liquide de fond et un effluent de tête.

Selon un ou plusieurs modes de réalisation, le procédé comprend en outre de compresser et recycler le premier effluent gazeux comprenant de l'hydrogène vers la première section de mélange ou l'au moins un échangeur de chaleur bobiné au moyen d'une première section de compression.

Selon un ou plusieurs modes de réalisation, l'hydrotraitement ou l'hydroconversion de la charge hydrocarbonée est effectué dans des conditions d'hydrotraitement ou d'hydroconversion, telles qu'au moins une des conditions opératoires suivantes :
la température est comprise entre environ 200 et environ 460°C ;
la pression totale est comprise entre environ 1 et environ 20 MPa ;
la vitesse spatiale horaire globale de charge liquide est comprise entre environ 0,05 et environ 12 h⁻¹ ;
le flux d'hydrogène comprend entre environ 50 et environ 100% volume d'hydrogène par rapport au volume du flux d'hydrogène ;
la quantité d'hydrogène par rapport à la charge hydrocarbonnée liquide est comprise entre environ 50 et environ 2500 Nm³/m³.

Selon un ou plusieurs modes de réalisation, le point initial d'ébullition de la charge hydrocarbonnée est supérieur à 120°C. Par exemple, la charge hydrocarbonée peut être choisie parmi les charges de type distillat atmosphérique, les distillats sous vide, les résidus atmosphériques ou sous vide ou les effluents d'unité Fischer-Tropsch. De manière préférée, la charge hydrocarbonée est choisie parmi les charges de type distillat atmosphérique (naphta, essence, kérosène et gazoles), distillat sous vide, par exemple gazoles, issus de la distillation directe du brut ou d'unités de conversion telles qu'un FCC (unité de craquage catalytique en lit fluidisé), un coker ou une unité de viscoréduction, le LCO (light cycle oil) gazole léger issu d'une unité de craquage catalytique, les charges provenant d'unités d'extraction d'aromatiques, les bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, les effluents d'une unité de Fischer-Tropsch, les huiles végétales, seules ou en mélange ou les graisses animales. La liste ci-dessus n'est pas limitative.

Selon un ou plusieurs modes de réalisation, la charge hydrocarbonée comprend au moins 5% poids de charges craquées par rapport au poids de la charge hydrocarbonée ; ou la charge hydrocarbonée comprend moins de 5% poids de charges craquées par rapport au poids de la charge hydrocarbonée de sorte que l'on puisse opérer une élévation de température supérieure à 15°C entre l'entrée et la sortie de la section réactionnelle d'hydrotraitement ou d'hydroconversion (R-1).

Selon un ou plusieurs modes de réalisation, le ballon séparateur froid à haute pression est opéré à une pression inférieure à la pression de la section réactionnelle d'hydrotraitement ou d'hydroconversion.

Selon un ou plusieurs modes de réalisation, la température du ballon séparateur froid à haute pression est comprise entre 20°C et 100°C.

Selon un ou plusieurs modes de réalisation, le ballon séparateur chaud à haute pression est opéré à une pression inférieure à la pression de la section réactionnelle d'hydrotraitement ou d'hydroconversion.

Selon un ou plusieurs modes de réalisation, la température du ballon séparateur chaud à haute pression est comprise entre 200°C et 450°C.

Selon un ou plusieurs modes de réalisation, la charge hydrocarbonée est à une température comprise entre 30 et 110°C, préférentiellement entre 34 et 100°C, à l'entrée de l'unité.

Selon un ou plusieurs modes de réalisation, la charge hydrocarbonée est à une température comprise entre 150 et 280°C, préférentiellement entre 160 et 260°C, à l'entrée de l'unité.

Selon un ou plusieurs modes de réalisation, le procédé comprend une étape de filtration de la charge hydrocarbonée à l'entrée de l'unité après une étape optionnelle de chauffage à une température comprise entre 50 et 100°C ou entre 150°C et 230°C. Selon un ou plusieurs modes de réalisation, le procédé comprend une étape de rétention de la charge hydrocarbonée filtrée dans un ballon de charge. Une étape de pompage de ladite charge depuis le ballon permet d'alimenter l'échangeur de chaleur bobiné S-1.

Selon un ou plusieurs modes de réalisation, la température de la charge hydrocarbonnée et optionnellement du flux d'hydrogène ou du mélange charge hydrocarbonée-flux d'hydrogène à la sortie de la section de mélange (située en amont de l'échangeur de chaleur bobiné) et/ou à l'entrée de l'échangeur de chaleur bobiné et/ou à l'entrée du by-pass est comprise entre 30 et 280°C, de préférence entre 34 et 260°C. Selon un ou plusieurs modes de réalisation particulièrement préférés, la température mentionnée ci-dessus est comprise entre 40 et 60°C (schéma à froid). Selon un ou plusieurs modes de réalisation particulièrement préférés, la température mentionnée ci-dessus est comprise entre 200 et 250°C (schéma à chaud).

Selon un ou plusieurs modes de réalisation, la température de la charge hydrocarbonnée et/ou du flux d'hydrogène ou du mélange charge hydrocarbonée-flux d'hydrogène chauffé à la sortie de l'échangeur de chaleur bobiné est comprise entre 200 et 460°C, de préférence entre 240 et 440°C.

Selon un ou plusieurs modes de réalisation, la température du mélange charge hydrocarbonée-flux d'hydrogène chauffé à l'entrée de la section réactionnelle d'hydrotraitement ou d'hydroconversion est comprise entre 200 et 460°C, de préférence entre 240 et 440°C.

Selon un ou plusieurs modes de réalisation, la température de l'effluent réactionnel à la sortie de la section réactionnelle d'hydrotraitement ou d'hydroconversion et/ou à l'entrée de l'échangeur de chaleur bobiné est comprise entre 205 et 475°C, de préférence entre 245 et 455°C.

Selon un ou plusieurs modes de réalisation, la température de l'effluent réactionnel refroidi à la sortie de l'échangeur de chaleur bobiné est comprise entre 70 et 450°C, de préférence entre 80 et 380°C.

Selon un troisième aspect, l'objet précité, ainsi que d'autres avantages, sont obtenus par une utilisation d'un échangeur de chaleur bobiné, ledit échangeur bobiné étant un échangeur de chaleur monopasse constitué par une enceinte verticale dans laquelle un ou plusieurs faisceaux de tubes sont enroulés de manière hélicoïdale autour d'un noyau central, en de nombreuses couches superposées, dans un procédé d'hydrotraitement ou d'hydroconversion.

Selon un ou plusieurs modes de réalisation, l'échangeur de chaleur bobiné est utilisé pour :
chauffer et distribuer directement un mélange charge hydrocarbonée-flux d'hydrogène vers une section réactionnelle d'hydrotraitement ou d'hydroconversion ; et
refroidir l'effluent de la section réactionnelle d'hydrotraitement ou d'hydroconversion.

Des modes de réalisation du dispositif, du procédé et de l'utilisation référencés ci-dessus ainsi que d'autres caractéristiques et avantages vont apparaître à la lecture de la description qui va suivre, donnée à titre uniquement illustratif et non limitatif, et en référence aux dessins suivants.

### Brève description des dessins

La figure 1 décrit un schéma d'un dispositif de référence dans lequel la charge de la section réactionnelle est préchauffée par l'effluent réactionnel dans un train d'échangeurs de chaleur de type tubes-calandre puis chauffée dans un four avant d'entrer dans la section réactionnelle.
La figure 2 décrit un schéma d'un dispositif selon la présente description dans lequel la charge de la section réactionnelle est chauffée par l'effluent réactionnel dans un échangeur de chaleur bobiné S-1 avant d'entrer directement dans la section réactionnelle.

### Description détaillée

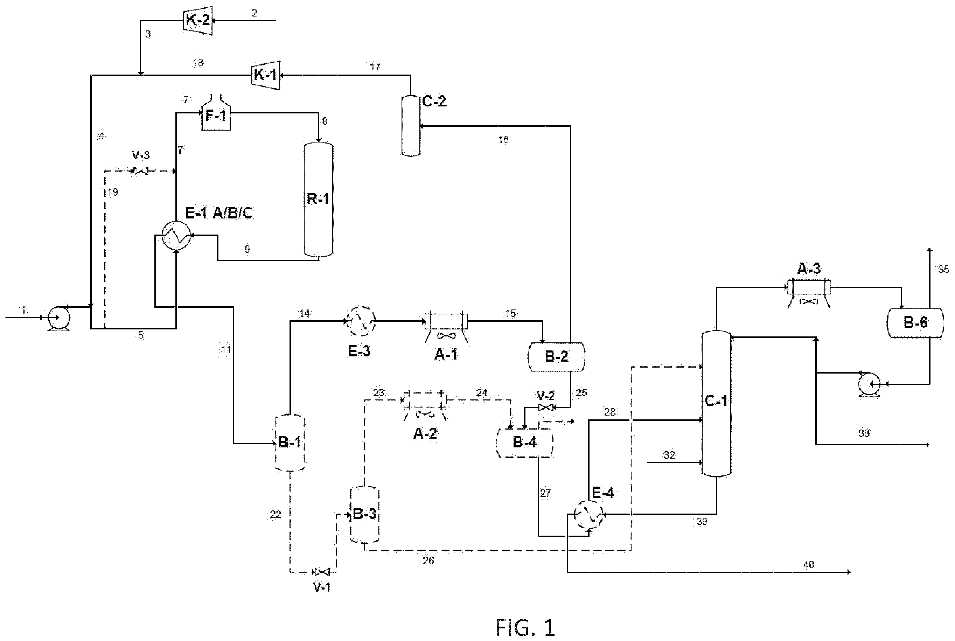

La présente description concerne le domaine des dispositifs et procédés d'hydroconversion, tels que les dispositifs et procédés d'hydrocraquage de charges lourdes, par exemple de résidus ou de gasoil sous-vide. La présente description concerne également le domaine des dispositifs et procédés d'hydrotraitement, tels que les dispositifs et procédés d'hydrodémétallation, d'hydrodéazotation et/ou d'hydrodésulfuration de résidu ou de gasoil. En référence à la figure 1, un dispositif d'hydrotraitement ou d'hydroconversion de référence de charges hydrocarbonées, telle que des gazoles, des distillats sous vide, des résidus atmosphérique ou sous vide ou d'effluents d'unité de Fischer-Tropsch, comprend :
- un première section de mélange de la charge hydrocarbonée (ligne 1) et d'un flux d'hydrogène (ligne 4) ;
- un ou plusieurs trains d'échangeurs de chaleur E-1A/B/C de type tubes-calandre pour préchauffer le mélange charge hydrocarbonée-flux d'hydrogène (appelé par la suite mélange hydrocarboné) (ligne 5) issu de la première section de mélange avec l'effluent réactionnel (ligne 9) d'une section réactionnelle d'hydrotraitement ou d'hydroconversion R-1 ;
- un four d'entrée de réacteur F-1 pour chauffer le mélange hydrocarboné préchauffé (ligne 7) issu du ou des trains d'échangeurs de chaleur tubes-calandre E-1 et distribuer le mélange hydrocarboné chauffé (ligne 8) vers la section réactionnelle d'hydrotraitement ou d'hydroconversion R-1 ;
- la section réactionnelle d'hydrotraitement ou d'hydroconversion R-1 ;
- optionnellement un by-pass (ligne d'évitement 19) de sorte qu'une partie du mélange hydrocarboné (ligne 5) puisse éviter le ou les trains d'échangeurs de chaleur tubes-calandre E-1 et permettre d'ajuster la température réactionnelle de la section réactionnelle d'hydrotraitement ou d'hydroconversion R-1 ;
- optionnellement un ballon séparateur chaud à haute pression B-1, dont la charge est constituée par l'effluent réactionnel refroidi après passage par les trains d'échangeurs de chaleur tubes-calandre E-1 (ligne 11), pour distribuer un premier effluent liquide comprenant au moins une fraction lourde (ligne 22) et un premier effluent gazeux comprenant une fraction légère (ligne 14) ;
- un ballon séparateur froid à haute pression B-2, dont la charge comprend au moins une partie de l'effluent réactionnel issu de la section réactionnelle d'hydrotraitement ou d'hydroconversion R-1 et refroidi après passage par le ou les trains d'échangeurs de chaleur tubes-calandre E-1 (lignes 11 et 14), pour distribuer un premier effluent liquide comprenant au moins une fraction légère (ligne 25) et un premier effluent gazeux comprenant de l'hydrogène (ligne 16) ;
- optionnellement un deuxième échangeur de chaleur E-3 pour refroidir l'au moins une partie de l'effluent réactionnel (ou optionnellement le premier effluent gazeux comprenant une fraction légère provenant du ballon séparateur chaud à haute pression B-1) ;
- optionnellement un premier aérocondenseur A-1 pour condenser l'au moins une partie de l'effluent réactionnel (ou optionnellement le premier effluent gazeux comprenant une fraction légère provenant du ballon séparateur chaud à haute pression B-1 et optionnellement provenant en outre du deuxième échangeur de chaleur E-3) ;
- optionnellement une colonne de lavage aux amines C-2 permettant d'éliminer au moins une partie de l'H₂S du premier effluent gazeux comprenant de l'hydrogène (ligne 16) issu du ballon séparateur froid à haute pression B-2, appelé aussi hydrogène recyclé ;
- optionnellement une première section de compression K-1 de l'hydrogène recyclé et lavé aux amines (ligne 17) ;
- optionnellement une deuxième section de compression K-2 d'hydrogène d'appoint (ligne 2) ;
- optionnellement une deuxième section de mélange de l'hydrogène recyclé, lavé et compressé (ligne 18) et de l'hydrogène d'appoint compressé (ligne 3) ;
- optionnellement un ballon séparateur chaud à moyenne pression B-3, dont la charge est le premier effluent liquide comprenant au moins une fraction lourde (ligne 22) issu du ballon séparateur chaud à haute pression B-1, et dont un effluent est un deuxième effluent liquide comprenant au moins une fraction lourde (ligne 26) qui est distribué vers une colonne de séparation C-1 ;
- optionnellement un deuxième aérocondenseur A-2 pour condenser un deuxième effluent gazeux comprenant une fraction légère (ligne 23) issu du ballon séparateur chaud à moyenne pression B-3 et distribuer un deuxième effluent gazeux comprenant une fraction légère condensé (ligne 24) ;
- optionnellement un ballon séparateur froid à moyenne pression B-4, pour séparer le premier effluent liquide comprenant au moins une fraction légère (ligne 25) issu du ballon séparateur froid à haute pression B-2 (et optionnellement le deuxième effluent gazeux comprenant une fraction légère (ligne 23) issu du ballon séparateur chaud à moyenne pression B-3 (et optionnellement condensé (ligne 24) dans le deuxième aérocondenseur A-2)), distribuer un deuxième effluent liquide comprenant au moins une fraction légère (lignes 27 et 28) vers la colonne de séparation C-1, et soustraire un deuxième effluent gazeux comprenant de l'hydrogène ;
- la colonne de séparation C-1 (e.g. colonne de fractionnement classique ou colonne de stripage à l'aide d'un fluide ajouté par la ligne 32) pour distribuer un liquide de fond (ligne 39) et un effluent de tête à partir de l'effluent liquide (ligne 25) issu du ballon séparateur froid à haute pression B-2, optionnellement issu du ballon séparateur chaud à haute pression B-1 (ligne 22), optionnellement issu du ballon séparateur chaud à moyenne pression B-3 (ligne 26), optionnellement issu du ballon séparateur froid à moyenne pression B-4 (ligne 27) ;
- optionnellement un troisième échangeur de chaleur E-4 pour chauffer la charge de la colonne de séparation C-1 (ligne 25, optionnellement ligne 27) et/ou refroidir le liquide de fond de la colonne de séparation C-1 (ligne 39) ;
- optionnellement un quatrième échangeur de chaleur (non représenté) adapté pour refroidir ou chauffer le premier ou deuxième effluent liquide comprenant au moins une fraction lourde.
- optionnellement un troisième aérocondenseur A-3 pour condenser l'effluent de tête issu de la colonne de séparation C-1 ; et
- optionnellement un ballon de reflux B-6 pour séparer l'effluent de tête en une fraction gazeuse de tête (e.g. gaz acide) (ligne 35) et une coupe liquide hydrocarbonnée (e.g. naphta) (ligne 38).

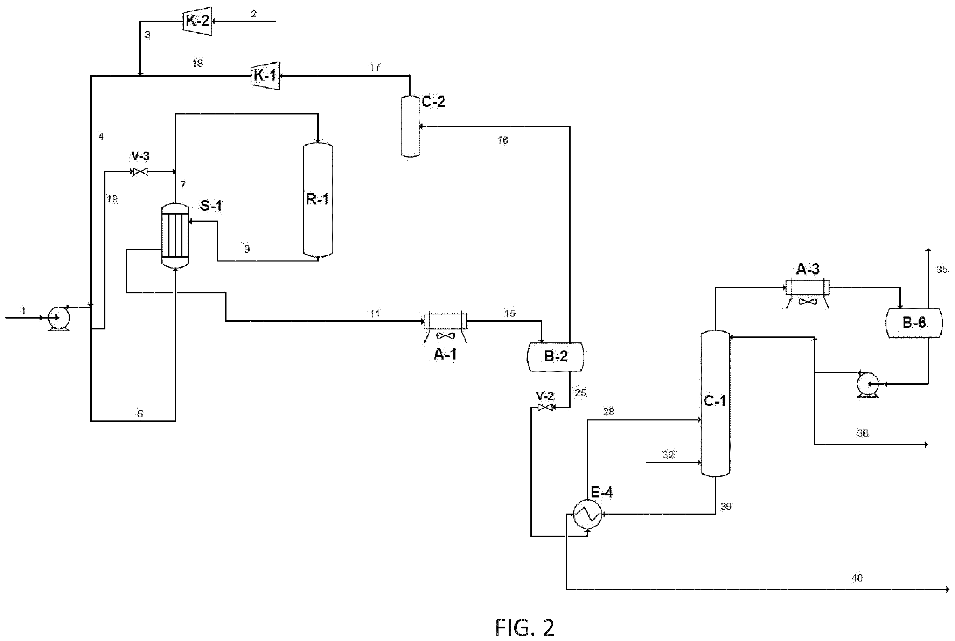

Les figures 1 et 2 présentent la même numérotation pour un même équipement du dispositif d'hydrotraitement ou d'hydroconversion.

En référence à la figure 2, le dispositif selon le premier aspect de la présente description comprend les éléments du dispositif de référence, à l'exception du ou des trains d'échangeurs de chaleur tubes-calandre E-1 (figure 1) qui sont remplacés par au moins un échangeur de chaleur bobiné S-1. Il est également important de noter que le four d'entrée de réacteur F-1 utilisé dans le dispositif de référence (figure 1) pour chauffer la charge, n'est plus nécessaire dans le dispositif selon la présente description. Selon un ou plusieurs modes de réalisation, la charge de la section réactionnelle est uniquement chauffée par l'effluent réactionnel, préférablement au moyen d'un seul échangeur de chaleur bobiné S-1, avant d'entrer directement dans la section réactionnelle.

En effet, nous avons mis en évidence qu'un dispositif d'hydrotraitement ou d'hydroconversion comprenant au moins un échangeur de chaleur bobiné S-1, en substitution du ou des trains d'échangeurs de chaleur tubes-calandre E-1 pour chauffer la charge de la section réactionnelle d'hydrotraitement ou d'hydroconversion R-1 avec l'effluent réactionnel, permet de s'affranchir du four d'entrée de réacteur F1 prévu pour le chauffage de ladite charge.

L'échangeur de chaleur bobiné S-1 est un échangeur de chaleur monopasse constitué par une enceinte verticale dans laquelle un ou plusieurs faisceaux de tubes sont enroulés de manière hélicoïdale autour d'un noyau central, en de nombreuses couches superposées (confère Technique de l'Ingénieur, J 3 601 V2 paragraphe 4.2). Ledit échangeur permet d'échanger de la chaleur entre un fluide circulant dans l'enceinte et au moins un fluide circulant dans le faisceau de tube.

Selon un ou plusieurs mode de réalisation, l'échangeur de chaleur bobiné S-1 est mis en oeuvre avec le fluide chaud côté calandre et le fluide froid côté tube.

Selon un ou plusieurs mode de réalisation, l'échangeur de chaleur bobiné S-1 est mis en oeuvre avec le fluide chaud côté tube et le fluide froid côté calandre.

Dans l'exemple de la figure 2, la première section de mélange est disposée en amont de l'au moins un échangeur de chaleur bobiné S-1. Dans un ou plusieurs modes de réalisation, la première section de mélange se situe en aval de l'au moins un échangeur de chaleur bobiné S-1.

Dans l'exemple de la figurer 2, l'échangeur de chaleur bobiné (S-1) est disposé pour chauffer le mélange charge hydrocarbonée-flux d'hydrogène. En revanche, l'échangeur de chaleur bobiné (S-1) peut être configuré pour chauffer la charge hydrocarbonée et optionnellement le flux d'hydrogène.

Il est également à noter que le dispositif selon la présente description peut comprendre un four de démarrage (non représenté) situé à l'entrée de la section réactionnelle d'hydrotraitement ou d'hydroconversion (i.e., sur la ligne 7 entre S-1 et R1). En revanche, le four de démarrage n'est utilisé que pour le démarrage du procédé ; le procédé ne comprend pas d'étape de chauffage entre l'échangeur de chaleur bobiné et la section réactionnelle d'hydrotraitement ou d'hydroconversion en opération stable.

Selon un ou plusieurs modes de réalisation, le point initial d'ébullition de la charge hydrocarbonnée est supérieur à 120°C. Dans le cas du diesel, le point initial est généralement d'environ 150°C et l'intervalle de distillation typiquement compris entre 170°C et 390°C. Dans le cas du résidu atmosphérique, le point initial est typiquement supérieur à 300°C, préférablement entre 340°C et 380°C. Dans le cas du résidu sous-vide, le point initial est typiquement entre 450°C et 600°C, préférablement entre 500°C et 550°C. Le distillat sous vide léger (Light Vacum gas oil LVGO selon la terminologie anglo-saxonne LVGO) est caractérisé par un intervalle de distillation compris entre 300°C et 430°C, préférablement entre 340°C et 400°C. Le distillat sous vide lourd (Heavy Vacum gas oil HVGO selon la terminologie anglo-saxonne) est caractérisé par un intervalle de distillation compris entre 400°C et 620°C, préférablement entre 440°C et 550°C. Les charges utilisables sont donc dans une large gamme de points d'ébullition.

Selon un ou plusieurs modes de réalisation, la charge hydrocarbonée contient au moins 10% volume, généralement au moins 20% volume, et souvent au moins 80% volume de composés bouillant au-dessus de 340°C.

Selon un ou plusieurs modes de réalisation, la teneur en azote de la charge hydrocarbonée est supérieure à 500 ppm poids, généralement comprise entre 500 et 10000 ppm poids, de manière plus générale comprise entre 700 et 4500 ppm poids et de manière encore plus générale comprise entre 800 et 4500 ppm poids.

Selon un ou plusieurs modes de réalisation, la teneur en soufre de la charge hydrocarbonée est comprise entre 0,01 et 5% poids, de manière générale comprise entre 0,2 et 4% poids et de manière encore plus générale entre 0,5 et 3% poids.

Selon un ou plusieurs modes de réalisation, la charge hydrocarbonée contient des métaux. Selon un ou plusieurs modes de réalisation, la teneur cumulée en nickel et vanadium de la charge hydrocarbonée est inférieure à 10 ppm poids, de manière préférée inférieure à 5 ppm poids et de manière encore plus préférée inférieure à 2 ppm poids.

Selon un ou plusieurs modes de réalisation, la teneur en asphaltènes de la charge hydrocarbonée est inférieure à 3000 ppm poids, de manière préférée inférieure à 1000 ppm poids, de manière encore plus préférée inférieure à 300 ppm poids.

Selon un ou plusieurs modes de réalisation, l'effluent réactionnel de la section réactionnelle d'hydrotraitement ou d'hydroconversion R-1 est constitué d'une coupe hydrocarbonée, généralement en phase mixte, comprenant de l'hydrogène, des gaz issus du craquage, et notamment de l'H₂S et du NH₃ issus des réactions de ladite section réactionnelle, proportionnément à la teneur en soufre et azote contenus dans la charge, éventuellement du CO₂ et d'autres gaz, des coupes légères tel que les LPG (ou GPL pour gaz de pétrole liquéfié) provenant de réactions secondaires, et au moins du naphta, et éventuellement les coupes hydrocarbonées suivantes : diesel, kérosène et/ou résidu non converti, etc., en fonction de la nature de la charge et du type de réaction.

Selon un ou plusieurs modes de réalisation, le premier effluent liquide comprenant au moins une fraction lourde comprend au moins une portion de la fraction la plus lourde de l'effluent de la section réactionnelle, comprenant du naphta, du diesel, du kérosène et/ou du résidu non converti en fonction de la nature de la charge et du type de réaction. Le premier effluent liquide comprenant au moins une fraction lourde peut également comprendre une fraction intermédiaire de l'effluent de la section réactionnelle, comprenant éventuellement du diesel, du kérosène, et/ou du naphta en fonction de la nature de la charge et du type de réaction.

Selon un ou plusieurs modes de réalisation, le premier effluent gazeux comprenant une fraction légère comprend au moins une portion de la fraction la plus légère de l'effluent réactionnelle, comprenant de l'hydrogène, des gaz issus du craquage, et notamment de l'H₂S et du NH₃ issus des réactions de la section réactionnelle, proportionnément à la teneur en soufre et azote contenus dans la charge, éventuellement du CO₂ et d'autres gaz, des coupes légères tel que les LPG provenant des réactions secondaires, et au moins du naphta.

Selon un ou plusieurs modes de réalisation, le premier effluent liquide comprenant au moins une fraction légère comprend une fraction de l'effluent réactionnel comprenant des coupes légères tel que les LPG provenant des réactions secondaires, et au moins du naphta.

Selon un ou plusieurs modes de réalisation, le premier effluent gazeux comprenant de l'hydrogène comprend des gaz issus du craquage, et notamment de l'H₂S issu des réactions de la section réactionnelle, proportionnément à la teneur en soufre contenue dans la charge, éventuellement du CO₂.

Selon un ou plusieurs modes de réalisation, le deuxième effluent liquide comprenant au moins une fraction lourde comprend la fraction la plus lourde de l'effluent de la section réactionnelle, comprenant du diesel, du kérosène et/ou du résidu non converti en fonction de la nature de la charge et du type de réaction.

Selon un ou plusieurs modes de réalisation, le deuxième effluent gazeux comprenant une fraction légère comprend une première fraction intermédiaire de l'effluent de la section réactionnelle, comprenant éventuellement du diesel, du kérosène, et/ou du naphta en fonction de la nature de la charge et du type de réaction.

Selon un ou plusieurs modes de réalisation, le deuxième effluent liquide comprenant au moins une fraction légère comprend la fraction la plus lourde du premier effluent liquide comprenant au moins une fraction légère. Le deuxième effluent liquide comprenant au moins une fraction légère peut également comprendre une deuxième fraction intermédiaire de l'effluent de la section réactionnelle comprenant du diesel, du kérosène, et/ou du naphta en fonction de la nature de la charge et du type de réaction.

Selon un ou plusieurs modes de réalisation, le deuxième effluent gazeux comprenant de l'hydrogène comprend au moins une portion de la fraction la plus légère de l'effluent réactionnelle, comprenant de l'hydrogène, des gaz issus du craquage, et notamment de l'H₂S issu des réactions de la section réactionnelle, proportionnément à la teneur en soufre contenu dans la charge, éventuellement du CO₂ et d'autres gaz.

Selon un ou plusieurs modes de réalisation, l'effluent de tête comprend des gaz issus du craquage, et notamment de l'H₂S, éventuellement du CO₂ et d'autres gaz, des LPGs, du naphta et éventuellement le fluide de strippage.

Selon un ou plusieurs modes de réalisation, la fraction gazeuse de tête comprend des gaz issus du craquage, et notamment de l'H₂S,éventuellement du CO₂ et d'autres gaz, des LPGs.

Selon un ou plusieurs modes de réalisation, la coupe liquide hydrocarbonnée comprend du naphta.

Selon un ou plusieurs modes de réalisation, le liquide de fond comprend la fraction la plus lourde de l'effluent de la section réactionnelle, comprenant du diesel, du kérosène et/ou du résidu non converti en fonction de la nature de la charge et du type de réaction.

Dans le dispositif selon la présente description, la section réactionnelle d'hydrotraitement ou d'hydroconversion R-1 peut comprendre un ou plusieurs réacteurs disposés en série ou en parallèle, par exemple deux réacteurs disposés en série. Chaque réacteur de la section réactionnelle comprend au moins un lit de catalyseur. Le catalyseur peut être mis en oeuvre en lit fixe ou en lit expansé, ou encore en lit bouillonnant. Dans le cas d'un catalyseur mis en oeuvre en lit fixe, il est possible de disposer plusieurs lits de catalyseurs dans au moins un réacteur. Chaque réacteur peut être muni de moyens de refroidissement comme, par exemple, un flux de trempe liquide ou gazeux (« quench » selon la terminologie anglo-saxonne) situé entre deux lits successifs de manière à contrôler la température à l'entrée de chacun des lits dans le réacteur. En revanche, les réacteurs d'hydrotraitement ou d'hydroconversion sont dépourvus de moyens de chauffe.

Selon un ou plusieurs modes de réalisation, la section réactionnelle d'hydrotraitement ou d'hydroconversion R-1 est la section réactionnelle d'une unité d'hydrocraquage.

Selon un ou plusieurs modes de réalisation ,la section réactionnelle d'hydrotraitement ou d'hydroconversion R-1 est la section réactionnelle d'une unité d'hydrodésulfuration de diesel et/ou de kérosène et/ou de distillat sous vide.

Selon un ou plusieurs modes de réalisation ,la section réactionnelle d'hydrotraitement ou d'hydroconversion R-1 est la section réactionnelle d'une unité d'hydrodésulfuration de naphta.

Selon un ou plusieurs modes de réalisation, la section réactionnelle d'hydrotraitement ou d'hydroconversion R-1 est incluse dans une unité d'hydroconversion de résidu ou de distillat ou d'huile désasphaltée en lit bouillonnant.

La colonne de séparation C-1, vise notamment à éliminer les gaz issus d'un craquage (appelés généralement gaz acides), et notamment l'H₂S issu des réactions de la section réactionnelle. Cette colonne est de préférence strippée au moyen de tout gaz de stripage tel que par exemple un gaz contenant de l'hydrogène ou de la vapeur. De préférence on utilise de la vapeur pour réaliser ledit stripage.

Selon le deuxième aspect, la présente description concerne également un procédé de mise en oeuvre du dispositif selon le premier aspect.

Selon un ou plusieurs modes de réalisation, les conditions opératoires de la section réactionnelle d'hydrotraitement ou d'hydroconversion R-1 comprennent au moins une des caractéristiques suivantes :
- la température est comprise entre environ 200 et environ 460°C, préférentiellement entre environ 240 et environ 450°C ;
- la pression totale est comprise entre environ 1 et environ 20 MPa, tel qu'entre 2 et 20 MPa, de préférence entre 2,5 et 18 MPa, et de façon très préférée entre 3 et 18 MPa ;
- la vitesse spatiale horaire globale de charge liquide pour chaque étape catalytique est comprise entre environ 0,05 et environ 12 h⁻¹, et préférablement entre environ 0,05 et environ 10 h⁻¹ ;
- la pureté de l'hydrogène utilisé est comprise entre environ 50 et 100% volume par rapport au volume de l'apport d'hydrogène (*i*.*e*., mélange hydrogène recyclé/hydrogène d'appoint) ;
- la quantité d'hydrogène par rapport à la charge hydrocarbonée liquide est comprise entre environ 50 et environ 2500 Nm³/m³ ; et
- la quantité de charge craquée dans la charge hydrocarbonée est d'au moins 5% poids, de préférence au moins 10%, telle que comprise entre 10 et 50% poids, par rapport au poids de la charge hydrocarbonée.

Tout catalyseur connu de l'homme du métier peut être utilisé dans le procédé selon la présente description, par exemple un catalyseur comprenant au moins un élément choisi parmi les éléments du Groupe VIII de la classification périodique (groupes 8, 9 et 10 de la nouvelle classification périodique) et éventuellement au moins un élément choisi parmi les éléments du Groupe VIB de la classification périodique (groupe 6 de la nouvelle classification périodique).

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC ; le groupe VIb selon la classification CAS correspond aux métaux de la colonne 6 selon la nouvelle classification IUPAC.

Pour la mise en oeuvre du procédé selon la présente description, on peut utiliser un catalyseur classique d'hydroconversion comprenant, sur un support amorphe, au moins un métal ou composé de métal ayant une fonction hydro-déshydrogénante. Ce catalyseur peut être un catalyseur comprenant des métaux du groupe VIII, par exemple du nickel et/ou du cobalt, le plus souvent en association avec au moins un métal du groupe VIB, par exemple du molybdène et/ou du tungstène. On peut par exemple employer un catalyseur comprenant de 0,5 à 10% poids de nickel (exprime en oxyde de nickel NiO) et de 1 à 30% poids de molybdène, de préférence de 5 à 20% poids de molybdène (exprime en oxyde de molybdène MoO₃) par rapport au poids total du catalyseur, sur un support minéral amorphe. La teneur totale en oxydes de métaux des groupes VIB et VIII dans le catalyseur est généralement comprise entre 5 et 40% poids et préférentiellement entre 7 et 30% poids par rapport au poids total du catalyseur. Le rapport pondéral (exprime sur la base des oxydes métalliques) entre métal (métaux) du groupe VIB et métal (métaux) du groupe VIII est, en général, d'environ 20 à environ 1, et le plus souvent d'environ 10 à environ 2. Le support est, par exemple, choisi dans le groupe forme par l'alumine, la silice, les silices-alumines, la magnésie, les argiles et les mélanges d'au moins deux de ces minéraux. Ce support peut également renfermer d'autres composés et par exemple, des oxydes choisis parmi l'oxyde de bore, la zircone, l'oxyde de titane, l'anhydride phosphorique.

Un autre type de catalyseur utilisable est un catalyseur contenant au moins une matrice, au moins une zéolithe Y et au moins un métal hydro-déshydrogénant. Les matrices, métaux et éléments additionnels décrits précédemment peuvent également entrer dans la composition de ce catalyseur. Des zéolithes Y avantageuses sont décrites dans la demande de brevet WO 00/71641, ainsi que les brevets EP 0 911 077, US 4,738,940 et US 4,738,941.

Selon un ou plusieurs modes de réalisation, le ballon séparateur froid à haute pression B-2, est opéré à une pression inférieure à celle de la section réactionnelle d'hydrotraitement ou d'hydroconversion R-1 ou du ballon séparateur chaud à haute pression B-1, par exemple une pression plus basse de 0,1 MPa à 1,0 MPa que celle de la section réactionnelle d'hydrotraitement ou d'hydroconversion R-1 ou du ballon séparateur chaud à haute pression B-1.

La température du ballon séparateur froid à haute pression B-2 est généralement la plus basse possible compte tenu des moyens de refroidissement disponibles. Ceci de façon à maximiser la pureté de l'hydrogène recyclé. La température du ballon séparateur froid à haute pression B-2 est généralement comprise entre 20°C et 100°C, de préférence entre 35°C et 70°C. Le premier effluent liquide comprenant au moins une fraction légère issu du ballon séparateur froid à haute pression B-2 est envoyé vers la colonne de séparation C-1, de préférence de type stripeur, de préférence équipé du ballon de reflux B-6.

Selon un ou plusieurs modes de réalisation, l'effluent réactionnel refroidi est envoyé vers le ballon séparateur chaud à haute pression B-1 optionnel opéré à une pression inférieure, par exemple une pression plus basse de 0,1 MPa à 1,0 MPa que celle de la section réactionnelle d'hydrotraitement ou d'hydroconversion R-1. La température du ballon séparateur chaud à haute pression B-1 est généralement comprise entre 200°C et 450°C, de préférence entre 250°C et 380°C et de manière très préférée entre 260°C et 360°C.

Selon un ou plusieurs modes de réalisation, le premier effluent liquide comprenant au moins une fraction lourde issu du ballon séparateur chaud à haute pression B-1 est envoyé dans une première vanne V-1 ou une turbine optionnelle et dirigé vers le ballon séparateur chaud à moyenne pression B-3 optionnel dont la pression est choisie de façon à pouvoir alimenter le ballon séparateur froid à moyenne pression B-4 optionnel avec le deuxième effluent liquide comprenant au moins une fraction lourde issu du ballon séparateur chaud à moyenne pression B-3.

Selon un ou plusieurs modes de réalisation, le ballon séparateur chaud à moyenne pression B-3 est opéré à une pression comprise entre 1,0 et 4,0 MPa, de préférence entre 1,5 et 3,5 MPa. La température du ballon séparateur chaud à moyenne pression B-3 est généralement comprise entre 150°C et 380°C, de préférence entre 200°C et 360°C.

Selon un ou plusieurs modes de réalisation, le premier effluent liquide comprenant au moins une fraction légère issu du ballon séparateur froid à haute pression B-2 est détendu dans une deuxième vanne V-2 ou une turbine optionnelle et dirigé vers le ballon séparateur froid à moyenne pression B-4 optionnel. La pression totale du ballon séparateur froid à moyenne pression B-4 est préférentiellement celle requise pour récupérer de façon efficace l'hydrogène compris dans le deuxième effluent gazeux comprenant de l'hydrogène séparé dans ledit ballon B-4. Cette récupération de l'hydrogène est de préférence réalisée dans une unité d'adsorption par inversion de pression. La pression totale du ballon séparateur froid à moyenne pression B-4 est généralement comprise entre 1,0 MPa et 4,0 MPa, de préférence comprise entre 1,5 MPa et 3,5 MPa. La température du le ballon séparateur froid à moyenne pression B-4 est généralement comprise entre 20°C et 100°C, de préférence entre 35°C et 70°C.

Le liquide de fond (ligne 39) de la colonne de séparation C-1 peut être refroidi via le troisième échangeur de chaleur E-4 avant d'être envoyé par la ligne 40 vers une section de fractionnement (non représentée) qui permet de séparer des coupes naphta, kérosène, gasoil et un résidu.

Le procédé selon la présente description est particulièrement adapté aux charges comprenant au moins 5% poids, de préférence au moins 10% poids de charges craquée par rapport au poids total de la charge hydrocarbonnée, c'est-à-dire provenant d'unité de craquage thermique ou catalytique. Typiquement les charges craquées proviennent d'une unité de viscoréduction, de cokéfaction ou d'un FCC. Selon un ou plusieurs modes de réalisation, les charges craquées proviennent d'une unité de craquage catalytique, et comprennent du LCO (« Light Cycle Oil » selon la terminologie anglo-saxonne) ou HCO (« Heavy Cycle Oil » selon la terminologie anglo-saxonne) produits par exemple par un FCC. Selon un ou plusieurs modes de réalisation, lesdites charges craquées contiennent des oléfines et leur indice de brome (« Bromine Index » selon la terminologie anglo-saxonne) est typiquement compris entre 4 et 20 mg/100g, préférentiellement entre 7 et 20 mg/100g mesuré suivant la méthode ASTM D2710. Le procédé est également adapté aux charges ne comprenant peu ou pas de charges craquées, par exemple lorsque les réactions dans la section réactionnelle sont suffisamment exothermiques pour que l'on puisse opérer avec une température des effluents à la sortie de la section réactionnelle supérieure à la température de la charge à l'entrée de la section réactionnelle d'au moins 5°C, de manière préférée d'au moins 15°C.

Le procédé selon la présente description est également adapté aux charges comprenant moins de 5% poids de charges craquée par rapport au poids total de la charge hydrocarbonnée ainsi qu'aux charges ne comprenant pas de charge craquée (e.g. moins de 1% poids). Par exemple, le procédé peut être opéré de sorte que l'élévation de température entre l'entrée et la sortie de la section réactionnelle soit supérieure à 15°C.

Selon le troisième aspect, la présente description concerne également une utilisation de l'échangeur de chaleur bobiné S-1 dans un dispositif selon le premier aspect ou un procédé selon le deuxième aspect, et notamment pour chauffer et distribuer directement le mélange hydrocarboné vers la section réactionnelle d'hydrotraitement ou d'hydroconversion R-1 ; et refroidir l'effluent de la section réactionnelle d'hydrotraitement ou d'hydroconversion R-1.

Le dispositif, le procédé et l'utilisation selon la présente description présentent les avantages suivants :
- l'échangeur de chaleur bobiné S-1 et optionnellement la présence d'une charge craquée dans la charge hydrocarbonée (une charge craquée générant une augmentation de la température dans la section réactionnelle, l'effluent réactionnel est plus haut en température à l'entrée de l'échangeur bobiné), permettent de chauffer le mélange hydrocarboné à une température suffisamment élevée pour pouvoir supprimer le four d'entrée de réacteur F-1 de la section réactionnelle d'hydrotraitement ou d'hydroconversion R-1 en marche normale ;
- l'échangeur de chaleur bobiné S-1 permet de refroidir l'effluent réactionnel à plus basse température que dans le dispositif de référence et par conséquent la puissance du premier aérocondenseur A-1 requise est plus faible ;
- l'échangeur de chaleur bobiné S-1 permet de diminuer la surface au sol nécessaire pour l'installation des équipements du dispositif ;
- l'échangeur de chaleur bobiné S-1 permet de diminuer la perte de charge dans la boucle réactionnelle et par voie de conséquence de diminuer la puissance requise dans la première section de compression K-1.

### Exemples

La figure 1 constitue un comparatif de référence et la figure 2 décrit un exemple de mode de réalisation du dispositif et du procédé selon la présente description.

La charge hydrocarbonée est une coupe présentant des points d'ébullition compris entre 187°C et 365°C, mélange à 61 % poids de gazole atmosphérique, à 11% poids de distillat sous vide lourd, à 14% poids de gazole craqué et à 14% poids de gazole de cokéfaction par rapport au poids total de la charge hydrocarbonée, et ayant les caractéristiques suivantes :

| | | |
|---|---|---|
| Densité | | 0,871 |
| Teneur en Soufre | % poids | 0,17% |
| Teneur en Azote | ppm poids | 641 |

Dans la présente demande, la densité (« specific gravity » selon la terminologie anglo-saxonne) de la charge hydrocarbonée est adimensionnelle.

Selon la présente description, comme représenté dans la figure 2, la charge hydrocarbonée est alimentée via la ligne 1. L'hydrogène d'appoint, de préférence en excès par rapport à la charge hydrocarbonée, est alimenté via la ligne 2 et la deuxième section de compression K-2 (e.g. compresseur) puis la ligne 3, et mélangé avec l'hydrogène de recycle dans la ligne 4. L'hydrogène est ensuite mélangé avec la charge hydrocarbonée (ligne 1) avant de distribuer le mélange hydrocarboné ainsi obtenu dans l'échangeur de chaleur bobiné S-1 via la ligne 5. L'échangeur de chaleur bobiné S-1 permet de chauffer le mélange hydrocarboné au moyen de l'effluent réactionnel. Dans cet exemple, l'échangeur de chaleur bobiné S-1 est tel que décrit dans la demande de brevet WO 2014/067223. Après cet échange de chaleur, le mélange hydrocarboné est amené directement dans une section d'hydrodésulfuration via la ligne 7, constituée par au moins un réacteur d'hydrodésulfuration (exemple de section réactionnelle d'hydrotraitement ou d'hydroconversion R-1) comprenant au moins un catalyseur d'hydrodésulfuration. La température nécessaire à la réaction d'hydrodésulfuration est ajustée en by-passant une partie du mélange hydrocarboné via la ligne 19 (optionnellement au moyen d'une vanne V-3).

Dans cet exemple, la section réactionnelle d'hydrotraitement ou d'hydroconversion R-1 est composée d'un réacteur d'hydrodésulfuration avec 3 lits de catalyseur. Les lits du réacteur d'hydrodésulfuration sont constitués de catalyseur Axens HR1248 (de type NiMo sur Al₂O₃). Les lits sont opérés environ à 7,50 MPa et à des températures comprises entre 325 et 390°C. La consommation chimique en hydrogène dans la section réactionnelle est de 1,1% poids par rapport à la charge hydrocarbonée fraiche.

L'effluent réactionnel est envoyé ensuite vers l'échangeur de chaleur bobiné S-1 via la ligne 9 puis vers le premier aérocondenseur A-1 via la ligne 11 avant d'entrer par la ligne 15 dans le ballon séparateur froid à haute pression B-2 permettant à la fois de réaliser une séparation gaz-liquide et une décantation d'une phase liquide aqueuse.

Le premier effluent liquide comprenant au moins une fraction légère issue du ballon séparateur froid à haute pression B-2 alimente le troisième échangeur de chaleur E-4 via la ligne 25 et le stripeur (exemple de colonne de séparation C-1) via la ligne 28. Le stripeur est opéré à 0,69 MPa en tête de colonne.

L'hydrogène recyclé issu du ballon séparateur froid à haute pression B-2 est envoyé via la ligne 16 vers la colonne de lavage aux amines C-2 permettant d'éliminer au moins une partie de l'H₂S. L'hydrogène recyclé est ensuite distribué via les lignes 17 et 18 vers la première section de mélange puis vers le réacteur d'hydrotraitement avec la charge hydrocarbonée, après compression au moyen de la première section de compression K-1 et mélange avec la charge (ligne 1).

Le stripeur est alimenté par de la vapeur de stripage via la ligne 32. En tête du stripeur, la fraction gazeuse de l'effluent de tête est récupérée (généralement appelée gaz acide) via la ligne 35, et une coupe de type naphta est récupérée via la ligne 38 présentant un point d'ébullition final le plus souvent supérieur à 100°C. Le liquide de fond du stripeur récupéré via la ligne 39 est refroidi dans le troisième échangeur de chaleur E-4 avant d'être envoyé via la ligne 40 vers une éventuelle section de fractionnement (non représentée) qui permet de récupérer des coupes naphta, kérosène, gasoil et un résidu.

Le tableau 1 compare :
- un dispositif et un procédé d'hydrotraitement de référence utilisant un train de trois échangeurs de chaleur charge/effluent E-1A/B/C de type tubes-calandre et au standard TEMA BEU (figure 1) et utilisant un four d'entrée de réacteur F-1 ; et
- un dispositif et un procédé d'hydrotraitement selon la présente description utilisant un seul échangeur de chaleur de type bobiné S-1 (figure 2) et n'utilisant pas de four d'entrée de réacteur F-1.

Le procédé de référence est opéré avec la même charge et les mêmes conditions opératoires que celles décrites ci-avant pour l'exemple du procédé selon la présente description.

| Tableau 1 | Comparatif (figure 1) | Exemple (figure 2) |
|---|---|---|
| Température (°C) du mélange hydrocarboné à l'entrée de E-1/S-1 (Ligne 5) | 56 | 56 |
| Température (°C) du mélange hydrocarboné à la sortie de E-1/S-1 (Ligne 7) | 337 | 385 |
| Température (°C) de l'effluent réactionnel à l'entrée de E-1/S-1 (Ligne 9) | 390 | 390 |
| Température (°C) de l'effluent réactionnel à la sortie de E-1/S-1 (Ligne 11) | 176 | 138 |
| Puissance (MW) du four d'entrée de réacteur F-1 | 11,9 | 0 |
| Puissance (MW) du premier aérocondenseur A-1 | 36,3 | 24,2 |
| Puissance totale (MW) du four d'entrée de réacteur et du premier aérocondenseur | 48,2 | 24,2 |
| Puissance (kW) de la première section de compression K-1 | 1780 | 1400 |

Comme démontré dans le tableau 1, dans le dispositif et le procédé selon la présente description :
- le four d'entrée de réacteur F-1 est inutile alors qu'il est essentiel pour le dispositif et le procédé de référence ;
- la puissance du premier aérocondenseur A-1 est divisée par 1,5 par rapport au dispositif et au procédé de référence ;
- la puissance totale du four d'entrée de réacteur F-1 et du premier aérocondenseur A-1 est divisée par 2 par rapport au dispositif et au procédé de référence ; et
- la puissance de la première section de compression K-1 est divisée par 1.3 par rapport au dispositif et au procédé de référence.

## Revendications

1. Dispositif d'hydroconversion ou d'hydrotraitement d'une charge hydrocarbonée, comprenant :
au moins un échangeur de chaleur bobiné (S-1), ledit échangeur bobiné étant un échangeur de chaleur monopasse constitué par une enceinte verticale dans laquelle un ou plusieurs faisceaux de tubes sont enroulés de manière hélicoïdale autour d'un noyau central, en de nombreuses couches superposées, adapté pour :
chauffer et distribuer directement la charge hydrocarbonée et optionnellement un flux d'hydrogène ou un mélange charge hydrocarbonée-flux d'hydrogène vers une section réactionnelle d'hydrotraitement ou d'hydroconversion (R-1), et
refroidir l'effluent réactionnel de la section réactionnelle d'hydrotraitement ou d'hydroconversion (R-1) ;
une première section de mélange adaptée pour mélanger la charge hydrocarbonée avec le flux d'hydrogène, ladite première section de mélange se situant en amont ou en aval de l'au moins un échangeur de chaleur bobiné (S-1) ;
la section réactionnelle d'hydrotraitement ou d'hydroconversion (R-1) adaptée pour hydrotraiter ou hydroconvertir la charge hydrocarbonée ;
un ballon séparateur froid à haute pression (B-2) adapté pour séparer au moins une partie de l'effluent réactionnel refroidi en un premier effluent liquide comprenant au moins une fraction légère et un premier effluent gazeux comprenant de l'hydrogène ; et
une colonne de séparation (C-1) adaptée pour séparer le premier effluent liquide comprenant au moins une fraction légère en un liquide de fond et un effluent de tête.

2. Dispositif d'hydroconversion ou d'hydrotraitement selon la revendication 1, comprenant un seul échangeur de chaleur bobiné (S-1).

3. Dispositif d'hydroconversion ou d'hydrotraitement selon la revendication 1 ou la revendication 2, comprenant en outre un by-pass (19) adapté pour distribuer directement une partie de la charge hydrocarbonée ou une partie du mélange charge hydrocarbonée-flux d'hydrogène depuis l'entrée de l'échangeur de chaleur bobiné (S-1) vers la sortie de l'échangeur de chaleur bobiné (S-1).

4. Dispositif d'hydroconversion ou d'hydrotraitement selon l'une quelconque des revendications précédentes, comprenant en outre un ballon séparateur chaud à haute pression (B-1) adapté pour séparer l'effluent réactionnel refroidi en un premier effluent liquide comprenant au moins une fraction lourde et un premier effluent gazeux comprenant une fraction légère distribué vers le ballon séparateur froid à haute pression (B-2).

5. Dispositif d'hydroconversion ou d'hydrotraitement selon la revendication 4, comprenant en outre un ballon séparateur chaud à moyenne pression (B-3) adapté pour séparer le premier effluent liquide comprenant au moins une fraction lourde en un deuxième effluent liquide comprenant au moins une fraction lourde distribué vers la colonne de séparation (C-1), et un deuxième effluent gazeux comprenant une fraction légère.

6. Dispositif d'hydroconversion ou d'hydrotraitement selon l'une quelconque des revendication précédentes, comprenant en outre un ballon séparateur froid à moyenne pression (B-4) adapté pour séparer le premier effluent liquide comprenant au moins une fraction légère en un deuxième effluent liquide comprenant au moins une fraction légère distribué vers la colonne de séparation (C-1) et un deuxième effluent gazeux comprenant de l'hydrogène.

7. Dispositif d'hydroconversion ou d'hydrotraitement selon la revendication 6 dépendante de la revendication 5, dans lequel le ballon séparateur froid à moyenne pression (B-4) est adapté pour séparer le deuxième effluent gazeux comprenant une fraction légère.

8. Procédé d'hydroconversion ou d'hydrotraitement d'une charge hydrocarbonée, comprenant les étapes suivantes :
chauffer et distribuer directement la charge hydrocarbonnée et optionnellement un flux d'hydrogène ou un mélange charge hydrocarbonée-flux d'hydrogène vers une section réactionnelle d'hydrotraitement ou d'hydroconversion (R-1) au moyen d'au moins un échangeur de chaleur bobiné (S-1) ;
mélanger la charge hydrocarbonée avec le flux d'hydrogène dans une première section de mélange, ledit mélange ayant lieu avant ou après l'étape de chauffe ;
refroidir l'effluent réactionnel de la section réactionnelle d'hydrotraitement ou d'hydroconversion (R-1) au moyen de l'au moins un échangeur de chaleur bobiné (S-1), ledit échangeur bobiné étant un échangeur de chaleur monopasse constitué par une enceinte verticale dans laquelle un ou plusieurs faisceaux de tubes sont enroulés de manière hélicoïdale autour d'un noyau central, en de nombreuses couches superposées ;
hydrotraiter ou hydroconvertir la charge hydrocarbonée dans la section réactionnelle d'hydrotraitement ou d'hydroconversion (R-1) comprenant au moins un réacteur comprenant au moins un catalyseur comprenant au moins un élément choisi parmi les éléments du Groupe VIII de la classification périodique ;
séparer au moins une partie de l'effluent réactionnel refroidi dans un ballon séparateur froid à haute pression (B-2) pour distribuer un premier effluent liquide comprenant au moins une fraction légère et un premier effluent gazeux comprenant de l'hydrogène ; et
séparer le premier effluent liquide comprenant au moins une fraction légère dans une colonne de séparation (C-1) pour distribuer un liquide de fond et un effluent de tête.

9. Procédé d'hydroconversion ou d'hydrotraitement selon la revendication 8, dans lequel l'hydrotraitement ou l'hydroconversion de la charge hydrocarbonée est effectué avec au moins une des conditions opératoires suivantes :
la température est comprise entre environ 200 et environ 460°C ;
la pression totale est comprise entre environ 1 et environ 20 MPa ;
la vitesse spatiale horaire globale de charge liquide est comprise entre environ 0,05 et environ 12 h-1 ;
le flux d'hydrogène comprend entre environ 50 et environ 100% volume d'hydrogène par rapport au volume du flux d'hydrogène ;
la quantité d'hydrogène par rapport à la charge hydrocarbonnée liquide est comprise entre environ 50 et environ 2500 Nm3/m3.

10. Procédé d'hydroconversion ou d'hydrotraitement selon la revendication 8 ou la revendication 9, dans lequel la charge hydrocarbonée comprend un point d'ébullition initial supérieur à 120°C.

11. Procédé d'hydroconversion ou d'hydrotraitement selon l'une quelconque des revendications 8 à 10, dans lequel :
la charge hydrocarbonée comprend au moins 5% poids de charges craquées par rapport au poids de la charge hydrocarbonée ; ou
la charge hydrocarbonée comprend moins de 5% poids de charges craquées par rapport au poids de la charge hydrocarbonée, et dans lequel on opère une élévation de température supérieure à 15°C entre l'entrée et la sortie de la section réactionnelle d'hydrotraitement ou d'hydroconversion (R-1).

12. Procédé d'hydroconversion ou d'hydrotraitement selon l'une quelconque des revendications 8 à 11, dans lequel le ballon séparateur froid à haute pression (B-2) est opéré à une pression inférieure à la pression de la section réactionnelle d'hydrotraitement ou d'hydroconversion (R-1).

13. Procédé d'hydroconversion ou d'hydrotraitement selon l'une quelconque des revendications 8 à 12, dans lequel la température du ballon séparateur froid à haute pression (B-2) est comprise entre 20°C et 100°C.

14. Utilisation d'un échangeur de chaleur bobiné (S-1), ledit échangeur bobiné étant un échangeur de chaleur monopasse constitué par une enceinte verticale dans laquelle un ou plusieurs faisceaux de tubes sont enroulés de manière hélicoïdale autour d'un noyau central, en de nombreuses couches superposées, dans un procédé d'hydroconversion ou d'hydrotraitement d'une charge hydrocarbonée.

15. Utilisation selon la revendication 14, dans laquelle l'échangeur de chaleur bobiné (S-1) est utilisé pour :
chauffer et distribuer directement un mélange charge hydrocarbonée-flux d'hydrogène vers une section réactionnelle d'hydrotraitement ou d'hydroconversion (R-1) ; et
refroidir l'effluent de la section réactionnelle d'hydrotraitement ou d'hydroconversion (R-1).
